# FASCICULE DE BREVET EUROPEEN

(11) **EP 0 774 372 B1**
(45) Date de publication et mention de la délivrance du brevet: **27.03.2002**
(21) Numéro de dépôt: 96116429.0
(22) Date de dépôt: 14.10.1996
(51) Int. Cl.: B60K 15/035, F16K 17/36

(54) **Dispositif de mise à l'air libre perfectionné pour réservoir de carburant de véhicule automobile et réservoir comportant ce dispositif**
Verbesserte Tankentlüftungsvorrichtung für Kraftfahrzeugtank und Kraftfahrzeugtank mit dieser Vorrichtung
Improved venting device for fuel tank for motor vehicle and fuel tank including this device

(30) Priorité: 30.10.1995 FR 9512791
(43) Date de publication de la demande: 21.05.1997
(73) Titulaire: Compagnie de Matériel et d'Equipements Techniques C.O.M.E.T., 60300 Senlis (FR)
(72) Inventeur: Romanek, Christian, 60430 Noailles (FR); Galland, Didier, 60590 Eragny sur Epte (FR)
(74) Mandataire: Rinuy, Santarelli

(56) Documents cités:
- EP-A- 0 254 631
- FR-A- 2 622 667
- GB-A- 2 254 125
- US-A- 3 738 384
- US-A- 4 487 215
- US-A- 4 646 772

## Description

L'invention concerne un réservoir de carburant comportant un dispositif de mise à l'air, et plus particulièrement un dispositif de mise à l'air libre, du type comportant une canalisation de mise à l'air libre qui débouche dans un point haut du réservoir et dans laquelle est interposée une valve munie d'une masselotte qui, en cas de retournement au moins partiel du véhicule, plaque, sous l'effet de son poids, un obturateur contre un siège supérieur de la valve pour empêcher que le carburant ne s'échappe du réservoir par la canalisation de mise à l'air libre.

Il a déjà été proposé, notamment dans le document EP-A-0 254 631 une telle valve dans laquelle la masselotte provoque l'ouverture de la valve lorsque le véhicule est en position normale.

Dans le document cité ci-dessus, la valve possède en outre comme fonction d'interdire le surremplissage du réservoir, notamment en provoquant la fermeture de la valve lorsque le carburant dépasse un certain niveau dans le réservoir.

A cet effet, la valve est munie d'un flotteur qui, porté par le carburant, est susceptible de soulever la bille et son obturateur afin de provoquer la fermeture de la valve.

Toutefois, lorsque le réservoir est à moitié vide, la valve est ouverte et par conséquent elle laisse s'échapper un certain débit de vapeur de carburant qui s'évapore.

On connaît également du document FR-A-2 622 667 un dispositif de mise à l'air conforme au préambule de la revendication 1.

Mais cette disposition, comme celle du document EP-A-0 254 631, nécessite l'utilisation d'une valve en deux parties coulissantes l'une par rapport à l'autre, l'une étant fixe par rapport au réservoir et l'autre étant reliée au flotteur, et il est apparu des risques de coincement entre les deux parties.

Dans le but de résoudre ces problèmes, l'invention propose un dispositif de mise à l'air libre pour un réservoir de carburant de véhicule automobile, du type comportant une canalisation de mise à l'air libre adaptée à déboucher dans un point haut du réservoir et dans laquelle est interposée une valve munie d'une masselotte qui, en cas de retournement au moins partiel du véhicule, plaque, sous l'effet de son poids, un obturateur contre un siège supérieur de la valve pour empêcher que le carburant ne s'échappe du réservoir par la canalisation de mise à l'air libre, la masselotte provoquant, sous l'effet de son poids, lorsque le véhicule est à l'arrêt en position sensiblement horizontale, l'obturation de la valve et des vibrations engendrées lors de la mise en marche ou du roulage du véhicule provoquant l'ouverture de la valve et la mise à l'air libre du réservoir, la valve comportant un logement délimité à une extrémité supérieure par le siège supérieur et à un extrémité inférieure par une portée inférieure, le siège et la portée étant agencés axialement en vis-à-vis l'un de l'autre selon un axe vertical du véhicule à l'arrêt, une portion supérieure et une portion inférieure de la canalisation débouchant au centre du siège supérieur et de la portée inférieure, respectivement, la masselotte et l'obturateur étant montés avec jeu dans le logement pour pouvoir obturer le siège et la portée, la masselotte étant une bille qui s'appuie, à l'arrêt du véhicule en position sensiblement horizontale, sur la portée inférieure qui est conique de manière à fermer la valve de manière étanche, caractérisé en ce que l'obturateur est en forme de cloche coiffant la bille et est surmonté d'une tête sphérique destinée à coopérer avec le siège supérieur qui est conique, et en ce que le siège supérieur comporte des ailettes qui s'étendent radialement vers l'intérieur de manière à délimiter un couloir de guidage de la tête sphérique.

L'invention propose également un réservoir de carburant de véhicule automobile comportant un tel dispositif de mise à l'air libre.

Selon d'autres caractéristiques de l'invention:
- lorsque l'inclinaison du véhicule par rapport à l'horizontale dépasse la valeur de la pente du cône de la portée inférieure, la bille est susceptible de se déplacer, sous l'action de son poids, le long de la portée inférieure conique, de manière à plaquer la tête sphérique du pointeau contre le siège supérieur ;
- lorsqu'elle est en appui sur la portée inférieure, la bille est susceptible d'être décollée de la portée sous l'effet d'une pression dans le réservoir supérieure à une pression de seuil et due à une dilatation du carburant contenu dans le réservoir ;
- un dispositif de remplissage du réservoir comporte un tube anti-refoulement dont une extrémité supérieure débouche dans l'extrémité supérieure d'un tube de remplissage et dont une extrémité inférieure débouche dans le réservoir, à un niveau inférieur au point haut du réservoir, et lorsque le carburant, en cours de remplissage du réservoir, atteint le niveau de l'extrémité inférieure du tube anti-refoulement, les gaz contenus dans le réservoir ne peuvent s'échapper ni par le tube anti-refoulement, ni par la canalisation de mise l'air libre qui est fermée, et interdisent le surremplissage du réservoir.
- la valve comporte deux embouts de raccordements à la portion supérieure et la portion inférieure de la canalisation de mise à l'air libre qui débouchent respectivement dans le siège supérieur et dans la portée inférieure ;
- le siège supérieur et la portée inférieure sont réalisés sous la forme de deux pièces indépendantes assemblées de manière étanche par emboîtement élastique ;
- la portion inférieure de la canalisation de mise à l'air libre comporte des ramifications dont chacune débouche dans un point haut du réservoir ;
- la valve est agencée près de l'extrémité supérieure du tube de remplissage.

D'autres caractéristiques et avantages de l'invention apparaîtront à la lecture de la description détaillée qui suit pour la compréhension de laquelle on se rapportera aux dessins annexés dans lesquels:
- la figure 1 est une vue schématique en coupe d'un réservoir de véhicule automobile muni d'un dispositif de remplissage et d'un dispositif de mise à l'air libre conforme aux enseignements de l'invention ;
- les figures 2, 3 et 4 sont des vues en coupe d'une valve selon l'invention représentée respectivement en trois positions de fonctionnement.

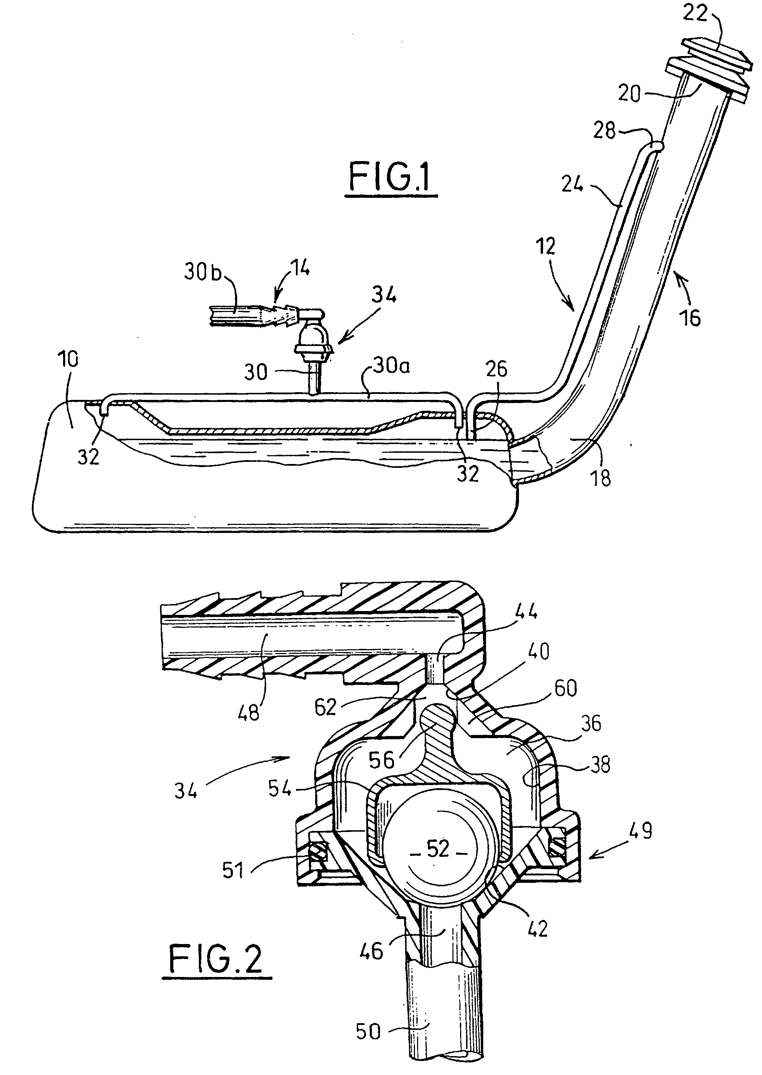

On a représenté sur la figure 1 un réservoir 10 de carburant de véhicule automobile qui est muni d'un dispositif de remplissage 12 et d'un dispositif de mise à l'air libre 14 conforme aux enseignements de l'invention.

De manière connue, le dispositif de remplissage 12 comporte un tube de remplissage 16 dont une extrémité inférieure 18 débouche dans le réservoir 10 et dont une extrémité supérieure 20 est destinée à recevoir un pistolet de remplissage (non représenté) et à être obturée par un bouchon 22.

Afin de permettre l'évacuation, lors du remplissage, des gaz initialement contenus dans le réservoir 10, il est prévu un tube anti-refoulement 24 dont une extrémité inférieure 26 débouche dans le réservoir 10 et dont une extrémité supérieure 28 débouche dans l'extrémité supérieure 20 du tube de remplissage 16.

Au cours du remplissage, les gaz initialement contenus dans le réservoir 10 sont évacués par le tube anti-refoulement 24 de sorte que leur évacuation ne perturbe pas l'écoulement du carburant dans le tube de remplissage 16.

Le réservoir 10 comporte également un dispositif de mise à l'air libre 14 conforme aux enseignements de l'invention.

Le dispositif de mise à l'air libre 14 comporte une canalisation 30 de mise à l'air libre dont une portion inférieure 30a débouche dans le réservoir 10 au niveau de ses points hauts 32 et dont une portion supérieure 30b est par exemple reliée à un dispositif de récupération et de filtrage des vapeurs (non représenté).

Une valve 34 est interposée entre les portions inférieure 30a et supérieure 30b de la canalisation 30 de mise à l'air libre.

Le dispositif de mise à l'air libre 14 permet de compenser la baisse du niveau de carburant dans le réservoir 10 en permettant l'admission d'air à l'intérieur du réservoir 10 afin que la pression régnant dans le réservoir soit sensiblement constante.

Le dispositif de mise à l'air libre 14 doit également permettre l'évacuation des gaz qui seraient comprimés à cause d'une dilatation du carburant contenu dans le réservoir 10 suite à une élévation de température afin d'éviter toute déformation du réservoir 10 susceptible d'entraîner sa rupture.

Toutefois, le dispositif de mise à l'air libre 14 ne doit pas permettre au carburant de s'échapper du réservoir en cas de retournement du véhicule pour des raisons évidentes de sécurité.

C'est le rôle de la valve 34 que d'éviter un tel écoulement.

La valve 34 représentée sur les figures 2 à 4 comporte un logement 36 qui comporte une paroi latérale cylindrique 38 et qui est fermée à ses deux extrémités axiales par un siège supérieur 40 et par une portée inférieure 42 au centre desquels débouchent des passages 44, 46 reliés à des embouts de raccordement 48, 50 avec, respectivement, les portions supérieure 30b et inférieure 30a de la canalisation de mise à l'air libre.

Dans l'exemple de réalisation de l'invention représenté sur les figures 2 à 4, la portée inférieure 42 et l'embout de raccordement 50 correspondant sont réalisés sous la forme d'une pièce indépendante emboîtée élastiquement sur une portion inférieure 49 du logement 36 avec interposition d'un joint d'étanchéité 51.

De manière connue, une bille 52 est reçue dans le logement 36 de la valve 14 et elle est coiffée d'un pointeau 54 en forme de cloche surmontée d'une tête sphérique 56 destinée à coopérer avec le siège supérieur 40 qui est en forme de cône évasé en direction du logement 36.

Comme on peut le voir sur la figure 2, lorsque le véhicule est à l'arrêt et sensiblement horizontal, la bille 52 repose, sous l'action de son poids, contre la portée inférieure 42 qui est un cône évasé vers le haut en direction du logement 36.

De la sorte, la bille 52 obture la canalisation de mise à l'air libre et, par exemple au cours du remplissage, les gaz contenus dans le réservoir ne peuvent s'échapper par le dispositif de mise à l'air libre 14, si bien que lorsque le carburant arrive au niveau de l'extrémité inférieure 26 du tube anti-refoulement 24, qui est agencée en dessous du niveau des points hauts 32 du réservoir 10, les gaz contenus dans le réservoir sont obligés d'être évacués par le tube de remplissage 16 et provoquent ainsi des bouillonnements qui entraînent l'arrêt de la distribution de carburant.

Etant donné que la valve 34 est fermée lorsque le véhicule est à l'arrêt en position sensiblement horizontale, cette valve 34 joue donc le rôle d'une interdiction de surremplissage du réservoir et évite l'adjonction d'un dispositif supplémentaire ainsi que cela est connu de l'état de la technique.

Toutefois, le véhicule étant à l'arrêt en position horizontale, si la pression dans le réservoir augmente de manière importante suite à une dilatation du carburant, la bille 52 est susceptible d'être soulevée sous l'effet de la pression afin de permettre l'évacuation d'une partie des gaz excédentaires et ainsi la valve 14 empêche toute rupture du réservoir 10.

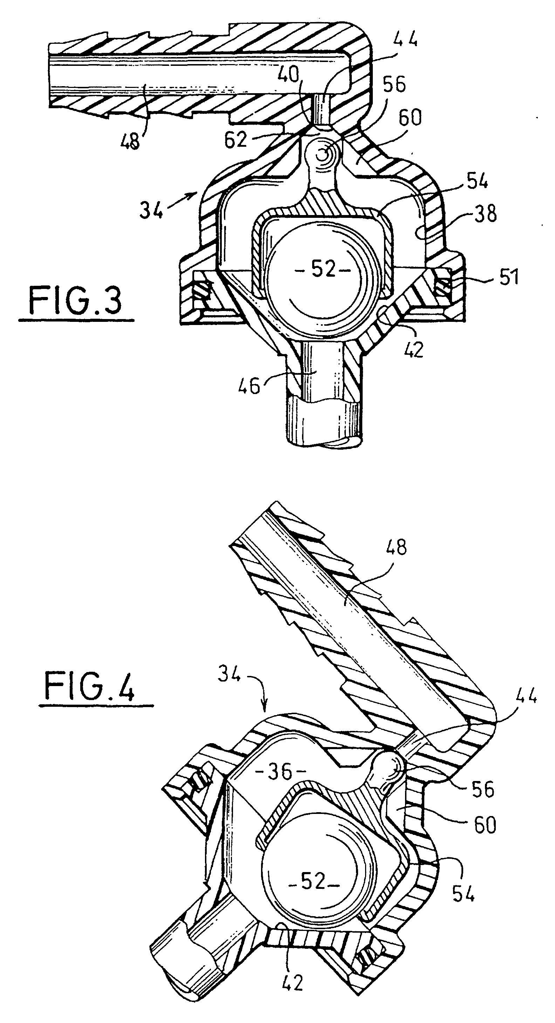

Lorsque le véhicule est en mouvement, il subit des accélérations tant longitudinales que latérales et verticales qui provoquent des trépidations de la bille 52 sur sa portée inférieure 42, ainsi que cela est représenté sur la figure 3, assurant par là même une mise à l'air libre apte à admettre de l'air à l'intérieur du réservoir 10 pour compenser la dépression due à la baisse de niveau de carburant dans le réservoir 10.

De manière connue, et ainsi que cela est représenté sur la figure 4, lorsque l'inclinaison du véhicule, selon une direction quelconque, dépasse la pente du cône de la portée inférieure 42, la bille 52, sous l'action de son poids, se déplace le long de la portée inférieure 42 et pousse ainsi la tête sphérique 56 du pointeau 54 en direction du siège supérieur 40 de manière à obturer le passage 44 et ainsi empêcher tout éventuel écoulement de carburant par la canalisation 30 de mise à l'air libre.

Le siège supérieur conique 40 comporte des ailettes 60 qui sont réparties angulairement de manière régulière et qui s'étendent radialement vers l'intérieur de manière à délimiter un couloir de guidage 62 de la tête sphérique 56 afin d'assurer l'obturation de la valve 14 de manière fiable.

Un avantage de la valve 34 selon l'invention est qu'elle ne nécessite pas de flotteur et qu'elle peut être agencée n'importe où dans le véhicule. Il est particulièrement intéressant de disposer la valve 34 près de l'extrémité supérieure 20 du tube de remplissage 16.

## Revendications

1. Dispositif de mise à l'air libre pour un réservoir de carburant de véhicule automobile, du type comportant une canalisation (30) de mise à l'air libre adaptée à déboucher dans un point haut (32) du réservoir (10) et dans laquelle est interposée une valve (34) munie d'une masselotte (52) qui, en cas de retournement au moins partiel du véhicule, plaque, sous l'effet de son poids, un obturateur (54) contre un siège supérieur (40) de la valve (34) pour empêcher que le carburant ne s'échappe du réservoir (10) par la canalisation (30) de mise à l'air libre, la masselotte (52) provoquant, sous l'effet de son poids, lorsque le véhicule est à l'arrêt en position sensiblement horizontale, l'obturation de la valve (34) et des vibrations engendrées lors de la mise en marche ou du roulage du véhicule provoquant l'ouverture de la valve (34) et la mise à l'air libre du réservoir (10), la valve (34) comportant un logement (36) délimité à une extrémité supérieure par le siège supérieur (40) et à une extrémité inférieure par une portée inférieure (42), le siège (40) et la portée (42) étant agencés axialement en vis-à-vis l'un de l'autre selon un axe vertical du véhicule à l'arrêt, une portion supérieure (30a) et une portion inférieure (30b) de la canalisation (30) débouchant au centre du siège supérieur (40) et de la portée inférieure (42), respectivement, la maselotte (52) et l'obturateur (54) étant montés avec jeu dans le logement (36) pour pouvoir obturer le siège (40) et la portée (42), la masselotte étant une bille (52) qui s'appuie, à l'arrêt du véhicule en position sensiblement horizontale, sur la portée inférieure (42) qui est conique de manière à fermer la valve de manière étanche, **caractérisé en ce que** l'obturateur (54) est en forme de cloche coiffant la bille (52) et est surmonté d'une tête sphérique (56) destinée à coopérer avec le siège supérieur (40) qui est conique, et **en ce que** le siège supérieur (40) comporte des ailettes (60) qui s'étendent radialement vers l'intérieur de manière à délimiter un couloir de guidage (62) de la tête sphérique (56).

2. Dispositif selon la revendication 1, **caractérisé en ce que**, lorsque l'inclinaison du véhicule par rapport à l'horizontale dépasse la valeur de la pente du cône de la portée inférieure (40), la bille (52) est susceptible de se déplacer, sous l'action de son poids, le long de la portée inférieure conique (42), de manière à plaquer la tête sphérique (56) du pointeau (54) contre le siège supérieur (40).

3. Dispositif selon la revendication 2 **caractérisé en ce que**, lorsqu'elle est en appui sur la portée inférieure (42), la bille est susceptible d'être décollée de la portée (42) sous l'effet d'une pression dans le réservoir (10) supérieure à une pression de seuil et due à une dilatation du carburant contenu dans le réservoir (10).

4. Dispositif selon l'une quelconque des revendications 1 à 3, **caractérisé en ce que** la valve (34) comporte deux embouts de raccordement (48, 50) à la portion supérieure (30b) et à la portion inférieure (30a) de la canalisation (30) de mise à l'air libre qui débouchent respectivement dans le siège supérieur (40) et dans la portée inférieure (42).

5. Dispositif selon l'une quelconque des revendications 1 à 4, **caractérisé en ce que** le siège supérieur (40) et la portée inférieure (42) sont réalisés sous la forme de deux pièces indépendantes assemblées de manière étanche par emboîtement élastique.

6. Réservoir de véhicule automobile comportant un dispositif de mise à l'air libre selon la revendication 3, **caractérisé en ce qu'**un dispositif (12) de remplissage du réservoir (10) comporte un tube anti-refoulement (24) dont une extrémité supérieure (28) débouche dans l'extrémité supérieure (20) d'un tube de remplissage (16) et dont une extrémité inférieure (26) débouche dans le réservoir (10), à un niveau inférieur au point haut (32) du réservoir (10), et **en ce que** lorsque le carburant, en cours de remplissage du réservoir (10), atteint le niveau de l'extrémité inférieure (26) du tube anti-refoulement (24), les gaz contenus dans le réservoir (10) ne peuvent s'échapper ni par le tube anti-refoulement, ni par la canalisation de mise à l'air libre qui est fermée, et interdisent le surremplissage du réservoir (10).

7. Réservoir selon la revendication 6, **caractérisé en ce que** la valve (34) comporte deux embouts de raccordement (48, 50) à la portion supérieure (30b) et à la portion inférieure (30a) de la canalisation (30) de mise à l'air libre qui débouchent respectivement dans le siège supérieur (40) et dans la portée inférieure (42).

8. Réservoir selon l'une quelconque des revendications 6 ou 7, **caractérisé en ce que** le siège supérieur (40) et la portée inférieure (42) sont réalisés sous la forme de deux pièces indépendantes assemblées de manière étanche par emboîtement élastique.

9. Réservoir de véhicule automobile, **caractérisé en ce qu'**il comporte un dispositif de mise à l'air libre selon l'une des revendications 1 à 5.

10. Réservoir selon l'une quelconque des revendications 6 à 9, **caractérisé en ce que** la portion inférieure (30a) de la canalisation de mise à l'air libre comporte des ramifications dont chacune débouche dans un point haut (32) du réservoir (10).

11. Réservoir selon l'une quelconque des revendications 6 à 10, **caractérisé en ce que** la valve (34) est agencée près de l'extrémité supérieure (20) du tube de remplissage (16).

## Claims

1. Device for communication with the open air for a motor vehicle fuel tank, of the type including a pipe (30) for communication with the open air suitable to open into a high point (32) of the tank (10) and in which is interposed a valve (34) provided with a weight (52) which, in case of at least partial over-turning of the vehicle presses, under the influence of its weight, an obturator (54) against an upper seat (40) of the valve (34) to prevent the fuel from escaping from the tank (10) through the pipe (30) for communication with the open air, the weight (52) under the influence of its weight, when the vehicle is stationery in a substantially horizontal position, causing the closure of the valve (34) and vibrations produced on travel or running of the vehicle causing opening of the valve (34) and communication of the tank (10) with the open air, the valve (34) including a housing (36) defined at an upper end by the upper seat (40) and at a lower end by a lower bearing surface (42), the seat (40) and the bearing surface (42) being arranged axially facing each other along a vertical axis of the stationery vehicle, an upper portion (30a) and a lower portion (30b) of the pipe (30) opening at the centre of the upper seat (40) and of the lower bearing surface (42) respectively, the weight (52) and the obturator (54) being mounted in the housing (36) with clearance to be able to close the seat (40) and the bearing surface (42), the weight being a ball (52) which, when the vehicle is stationery in a substantially horizontal position, bears on the lower bearing surface (42) which is conical so as to close the valve in tight manner, **characterised by** the fact that the obturator (54) is bell-shaped, covering the ball (52) and has on top of it a spherical head (56) intended to co-operate with the upper seat (40) which is conical, and by the fact that the upper seat (40) includes vanes (60) which extend radially inwardly so as to define a passage (62) for guiding the spherical head (56).

2. Device as described in claim 1, **characterised by** the fact that, when the gradient of the vehicle relative to the horizontal exceeds the value of the slope of the cone of the lower bearing surface (40), the ball (52) is able to be displaced, under the influence of its weight, along the conical lower bearing surface (42), so as to press the spherical head (56) of the needle (54) against the upper seat (40).

3. Device as described in claim 2, **characterised by** the fact that, when it bears against the lower bearing surface (42), the ball is able to be separated from the bearing surface (42) under the influence of a pressure in the tank (10) greater than a threshold pressure and due to expansion of the fuel contained in the tank (10).

4. Device as described in any one of claims 1 to 3, **characterised by** the fact that the valve (34) includes two connection nozzles (48, 50) to the upper portion (30b) and to the lower portion (30a) of the pipe (30) for communication with the open air which open into the upper seat (40) and into the lower bearing surface (42), respectively.

5. Device as described in any one of claims 1 to 4, **characterised by** the fact that the upper seat (40) and the lower bearing surface (42) are made in the form of two independent pieces assembled in tight manner by elastic fitting.

6. Motor vehicle fuel tank including a device for communication with the open air as described in claim 3, **characterised by** the fact that a device (12) for filling the tank (10) includes a blow-back prevention pipe (24) an upper end (28 of which opens into the upper end (20) of a filler pipe (16) and a lower end (26) of which opens into the tank (10), at a level lower than the high point (32) of the tank (10), and by the fact that, when the fuel, during filling of the tank (10), reaches the level of the lower end (26) of the blow-back prevention pipe (24), the gases contained in the tank (10) cannot escape either through the blow-back prevention pipe or through the pipe for communication with the open air which is closed, and prevent over-filling of the tank (10).

7. Tank as described in claim 6, **characterised by** the fact that the valve (34) includes two nozzles (48, 50) for connection to the upper portion (30b) and to the lower portion (30a) of the pipe (30) for communication with the open air which open into the upper seat (40) and into the lower bearing surface (42), respectively.

8. Tank as described in either of claims 6 or 7, **characterised by** the fact that the upper seat (40) and the lower bearing surface (42) are made in the form of two independent pieces assembled in tight manner by elastic fitting.

9. Motor vehicle tank, **characterised by** the fact that it includes a device for communication with the open air as described in one of claims 1 to 5.

10. Tank as described in any one of claims 6 to 9, **characterised by** the fact that the lower portion (30a) of the pipe for communication with the open air includes branches, each of which opens into a hight point (32) of the tank (10).

11. Tank as described in any one of claims 6 to 10, **characterised by** the fact that the valve (34) is arranged close to the upper end (20) of the filler pipe (16).

## Patentansprüche

1. Entlüftungsvorrichtung für einen Kraftfahrzeug-Treibstofftank, welche Entlüftungskanäle (30) aufweist, die dazu geeignet sind, an einem hoch gelegenen Punkt (32) des Tanks (10) zu münden,und bei denen ein mit einem Reguliergewicht versehenes Ventil zwischengelagert ist,und welches Reguliergewicht, falls sich das Fahrzeug mindestens teilweise umdreht, unter der Wirkung seines Gewichts einen Verschluß (54) gegen den oberen Sitz (40) des Ventils (30) presst um zu verhindern, daß der Treibstoff aus dem Tank (10) durch die Kanäle (30) entweicht, wobei das Reguliergewicht (32) unter der Wirkung seines Gewichts das Ventil (34) verschließt,sobald das Fahrzeug in im wesentlichen horizontaler Stellung stillsteht,und wobei beim Anfahren und Rollen des Fahrzeugs erzeugte Schwingungen die Öffnung des Ventils (34) und die Lüftung des Tanks (10) hervorrufen, und wobei das Ventil (34) einen an einem oberen Ende durch den oberen Sitz (40) und an einem unteren Ende durch eine untere Auflagefläche (42) begrenzte Ausnehmung (36) aufweist, wobei der Sitz (40) und die Auflagefläche (42) axial einander gegenüber entlang einer vertikalen Achse des im Stillstand befindlichen Fahrzeugs angeordnet sind, wobei ein oberer Teil (30a) und ein unterer Teil (30b) der Kanäle (30) jeweils im Zentrum des oberen Sitzes (40) und der unteren Auflagefläche (42) münden, wobei das Reguliergewicht (52) und der Verschluß (54) mit Spiel in der Ausnehmung (36) angebracht sind, um den Sitz (40) und die Auflagefläche verschließen zu können, wobei das Reguliergewicht eine Kugel (52) ist, die bei im wesentlichen horizontalem Stillstand des Fahrzeugs auf der unteren konischen Auflagefläche (42) aufliegt, so daß das Ventil dicht geschlossen wird, **dadurch gekennzeichnet, daß** der Verschluß (54) glockenförmig ist und die Kugel oben bedeckt und von einem kugelförmigen Kopf (56) überragt wird, der dazu bestimmt ist, mit dem oberen konischen Sitz (40) zusammenzuwirken und dadurch, daß der obere Sitz (40) Flügel (60) aufweist, die sich radial nach innen erstrecken, so daß ein Führungskorridor (62) für den kugelförmigen Kopf (56) abgegrenzt wird.

2. Vorrichtung nach Anspruch 1, **dadurch gekennzeichnet, daß** die Kugel (52), wenn die Neigung des Fahrzeuges in Bezug auf die Horizontale den Neigungswert des Kegels der unteren Auflagefläche (42) überschreitet, sich unter der Wirkung ihres Gewichts entlang der unteren konischen Auflagefläche (42) bewegen kann, so daß der kugelförmige Kopf (56) der Arretiervorrichtung (54) gegen den oberen Sitz (40) gepresst wird.

3. Vorrichtung nach Anspruch 2, **dadurch gekennzeichnet, daß**, wenn sie sich auf der unteren Auflagefläche (42) aufstützt, die Kugel unter einer Druckeinwirkung im Tank (10), die höher ist als ein Grenzdruck, von der Auflagefläche (42) und wegen einer Ausdehnung des Brennstoffes im Tank (10) abheben kann.

4. Vorrichtung nach irgendeinem der Ansprüche 1 bis 3, **dadurch gekennzeichnet, daß** das Ventil (34) zwei Anschlußstücke (48, 50) im oberen Teil (30b) und im unteren Teil (30a) der Entlüftungskanäle (30), die jeweils in den oberen Sitz (40) und die untere Auflagefläche (42) münden, aufweist.

5. Vorrichtung nach irgendeinem der Ansprüche 1 bis 4, **dadurch gekennzeichnet, daß** der obere Sitz (40) und die untere Auflagefläche (42) in Form von zwei unabhängigen, dicht durch elastische Einfügung verbundene Stücke ausgeführt sind.

6. Kraftfahrzeugtank, welcher eine Entlüftungsvorrichtung nach Anspruch 3 aufweist, **dadurch gekennzeichnet, daß** eine Vorrichtung (12) zum Auffüllen des Tanks (10) ein Rückströmrohr (24) aufweist, von dem ein oberes Ende (28) in das obere Ende (20) eines Füllrohres (16) mündet, und von dem ein unteres Ende (26) auf einer Höhe in den Tank (10) mündet, die unterhalb des hoch gelegenen Punktes (32) des Tanks (10) liegt, und dadurch, daß, wenn der Treibstoff während des Auffüllens des Tanks (10) das Niveau des unteren Endes (26) des Rückströmrohres (24) erreicht, die in dem Tank (10) enthaltenen Gase weder durch das Rückströmrohr noch durch die geschlossenen Entlüftungskanäle entweichen können und das Überfüllen des Tanks (10) verhindern.

7. Tank nach Anspruch 6, **dadurch gekennzeichnet, daß** das Ventil (34) zwei Anschlußstücke (48, 50) im oberen Teil (30b) und im unteren Teil (30a) der Entlüftungskanäle (30), die jeweils in den oberen Sitz (40) und die untere Auflagefläche (42) münden, aufweist.

8. Tank nach den Ansprüchen 6 oder 7, **dadurch gekennzeichnet, daß** der obere Sitz (40) und die untere Auflagefläche (42) in Form von zwei unabhängigen, dicht durch elastische Einfügung verbundene Stücke ausgeführt sind.

9. Kraftfahrzeugtank, **dadurch gekennzeichnet, daß** er eine Entlüftungsvorrichtung nach einem der Ansprüche 1 bis 5 aufweist.

10. Tank nach irgendeinem der Ansprüche 6 bis 9, **dadurch gekennzeichnet, daß** der obere Teil (30a) der Entlüftungskanäle Verzweigungen aufweist, von denen jede in einem hochgelegenen Punkt (32) des Tanks (10) mündet.

11. Tank nach irgendeinem der Ansprüche 6 bis 10, **dadurch gekennzeichnet, daß** das Ventil (34) in der Nähe des oberen Endes (20) des Füllrohres (16) angeordnet ist.
